Europäisches Patentamt

European Patent Office

Office européen des brevets

(11) Veröffentlichungsnummer: **0 142 700**
**B1**

(12) **EUROPÄISCHE PATENTSCHRIFT**

(45) Veröffentlichungstag der Patentschrift:
**11.05.88**

(21) Anmeldenummer: **84112306.0**

(22) Anmeldetag: **12.10.84**

(51) Int. Cl.⁴: **C 08 G 18/10,** C 08 G 18/80,
C 08 G 18/42

㊴ Verwendung eines nicht wäßrigen Lacks zur Herstellung von Steinschlagschutzschichten im Kraftfahrzeugbau.

(30) Priorität: **14.10.83 DE 3337395**

(43) Veröffentlichungstag der Anmeldung:
**29.05.85 Patentblatt 85/22**

(45) Bekanntmachung des Hinweises auf die Patenterteilung:
**11.05.88 Patentblatt 88/19**

(84) Benannte Vertragsstaaten:
**AT BE DE FR GB IT NL SE**

(56) Entgegenhaltungen:
**FR - A - 1 317 125**
**FR - A - 1 317 150**
**US - A - 3 645 943**

**Die Akte enthält technische Angaben, die nach dem Eingang der Anmeldung eingereicht wurden und die nicht in dieser Patentschrift enthalten sind.**

(73) Patentinhaber: **Herberts Gesellschaft mit beschränkter Haftung, Christbusch 25, D-5600 Wuppertal 2 (DE)**

(72) Erfinder: **Heinrich, Siegfried, Ing. (grad),
Augusta-Strasse 84, D-5600 Wuppertal 1 (DE)**
Erfinder: **Heitzmann, Rudolf, Dr. Dipl.-Chem.,
Waldstrasse 7, D-7803 Gundelfingen (DE)**
Erfinder: **Shafik, Ahmed, Dr. Dipl.-Chem., Im
Vogelholz 46 A, D-5600 Wuppertal 21 (DE)**

(74) Vertreter: **Türk, Gille, Hrabal, Bruckner Strasse 20,
D-4000 Düsseldorf 13 (DE)**

**Beschreibung**

Die Erfindung betrifft die Verwendung eines Lacks mit hoher Steinschlagresistenz enthaltend als Bindemittel ein filmbildendes Gemisch aus hydroxylgruppenhaltigen Copolymerisaten mit blockierten Polyisocyanaten in organischen Lösungsmitteln, sowie übliche Lackzusatzstoffe, gegebenenfalls Pigmente und Füllstoffe.

Bei der Herstellung von Mehrschichtlackierungen von Kraftfahrzeugkarosserie-Teilen gewinnt eine ausreichende Steinschlagschutz-Resistenz der Lackschichten zunehmende Bedeutung, da die Karosserien aus aerodynamischen Gründen weniger steile Frontpartien besitzen und deshalb grössere Bereiche der Karosserie Steinschlag während der Fahrt ausgesetzt sind. Hinzu kommt, dass im Winter bei Glätte zunehmend mit Steinsplit gestreut wird anstelle von Salz.

Eine steinschlagresistente Lackschicht kann grundsätzlich zusätzlich zum üblichen Lackaufbau (Grundierung/Decklack) aufgebracht werden. Sie kann dickschichtig wie in der EP-A-59 962 oder dünnschichtig appliziert werden. Steinschlagschutzschichten, welche dickschichtig appliziert werden, unterscheiden sich in der Chemie ihrer Bindemittel (meist geblockte polyetherhaltige Isocyanate, aminvernetzend) von den dünnschichtigen Steinschlagschutzschichten (OH-funktionelle Copolymerisate, z.B. Polyester usw., vernetzend über geblockte Polyisocyanate). Während die dickschichtigen Systeme gummielastische Filme ergeben, sind die dünnschichtigen Systeme wesentlich härter eingestellt, jedoch im Gegensatz zu herkömmlichen Lackschichten zäh-elastisch und somit nicht schleifbar.

Appliziert man die dickschichtigen Systeme dünnschichtig, ist kaum noch eine steinschlagschützende Wirkung vorhanden (wegen der sehr weichen Struktur). Appliziert man dünnschichtige Systeme dickschichtig, erhält man wegen der höheren Härte keine gummi-elastischen Schichten, jedoch Filmstörungen wie Kocher, Blasen usw.

Beide Arten von Steinschlagschutzschichten werden üblicherweise (meist nass-in-nass) mit einem Füller überzogen, so dass man glatte, schleifbare Oberflächen erhält.

Füller gehören bei der Automobilserienlackierung zum Stand der Technik und sollen glatte Oberflächen erzeugen, indem sie Unebenheiten des Untergrundes ausgleichen (hoher Füllstoffgehalt). Zusätzlich müssen Füller relativ harte Filme liefern, damit eine Nassschleifbarkeit mit 400er-600er Papier gewährleistet ist, ohne dass das Schleifpapier mit Schleifschlamm zusetzt. Die Füller des Standes der Technik enthalten als Bindemittel Alkyd(Polyester)harze, Aminharze und evtl. Epoxiharze. Solche Bindemittel liefern harte, jedoch nicht sehr flexible Lackfilme, so dass eine steinschlagschützende Wirkung nur eingeschränkt vorhanden ist. Aus diesem Grunde besteht der Wunsch der Automobilindustrie nach einer zusätzlichen Steinschlagschutzschicht, wobei die Schleifbarkeit durch den darüberliegenden Füller erreicht wird.

Nachteilig dabei ist, dass eine zusätzliche Lackschicht aufgebracht werden muss (erhöhte Materialkosten, zusätzlicher Arbeitsgang). Optimal wäre eine Lackschicht, welche sowohl gute steinschlagschützende Wirkung als auch die für die jeweilige Lackschicht des üblichen Lackaufbaus geforderten Eigenschaften besitzt (Glanz, Schleifbarkeit, Witterungsbeständigkeit usw.).

Aus der DE-A-31 40 834 ist eine Mehrschichtlackierung bekannt, gemäss der zwischen der Grundierung und der Decklackierung eine Zwischenschicht auf Basis eines in organischen Lösungsmitteln oder Wasser gelösten, gegebenenfalls durch Zusatz von Monoalkoholen und/oder ungesättigten Kohlenwasserstoffharzen modifizierten und/oder hydrolysierten Maleinsäureanhydridadduktes an Dienpolymerisate aufgebracht ist. Derartige Bindemittel erfordern jedoch hohe Einbrenntemperaturen von etwa 180 bis 200°C während mindestens etwa 15 Minuten. Es besteht ein grosses Bedürfnis nach niedrigen Einbrenntemperaturen, möglichst unter 140°C.

Aus der EP-A-59 962 ist eine Steinschlagschutzschicht für Kraftfahrzeuge bekannt, dessen Bindemittel ein lagerstabiles Gemisch aus bestimmten Aminen mit einem Vorpolymerisat mit einem durchschnittlichen Molekulargewicht von 500 bis 15000 ist, das durchschnittlich 2 bis 6 ketoximblockierte NCO-Gruppen enthält, die über cycloaliphatische und/oder aliphatische Gruppen am Vorpolymer gebunden sind.

Ähnliche Bindemittelformulierungen sind beschrieben in DE-A-21 31 299, 31 08 861 und 2 814 079. Mit diesen Bindemitteln werden Schutzschichten mit ausgezeichneten Eigenschaften erhalten, jedoch ist die Verwendung der dort eingesetzten Amine aus arbeitshygienischen Gründen nicht erwünscht.

In der FR-A-1 317 150 und der FR-A-1 317 125 werden Beschichtungsmittel auf Basis eines blockierten Isocyanatgruppen aufweisenden Polyether-Prepolymeren aus einem Polyetherpolyol und einem aromatischen, cycloaliphatischen oder aliphatischen Diisocyanat beschrieben, dessen freie Isocyanatgruppen mit Acetessigester blockiert sind. Als Vernetzungsmittel dienen Polyether, deren Umsetzungsprodukte mit Isocyanat bzw. Polyole mit Urethangruppen.

Der Erfindung liegt die Aufgabe zugrunde, einen Lack für die Verwendung zur Herstellung von Steinschlagschutzschichten im Kraftfahrzeugbau zu finden, der bei niedrigen Einbrenntemperaturen von z.B. schon 120°C eingebrannt werden kann und der eine ausgeprägte Lagerstabilität auch bei Temperaturen über 25°C besitzt und auch gegen Witterungseinflüsse beständig ist. Ausserdem sollen mit diesem Lack selbst bei geringen Schichtdicken von weniger als 50 μm gegenüber Steinschlag äusserst unempfindliche Filme erhalten werden, und es soll die Möglichkeit bestehen, in dem Lack auch schwer dispergierbare Pigmente einsetzen zu können.

Es wurde nun gefunden, dass diese Aufgabenstellung in überraschend einfacher Weise gelöst werden kann, wenn als Bindemittel für den Lack ein lagerstabiles Gemisch aus hydroxylgruppenhaltigen Copolymerisaten mit bestimmten blockierten Isocyanaten verwendet wird.

Gegenstand der Erfindung ist daher die Verwendung eines nicht wässrigen Lacks, enthaltend als Bindemittel ein filmbildendes Gemisch aus (a) hydroxylgruppenhaltigen Copolymerisaten und (b) blockierten Polyisocyanaten, die durch Umsetzung von (b1) Polyhydroxylverbindungen mit 2 bis 4 Hydroxylgruppen pro Molekül und mit einem Molekulargewicht von 400 bis 2000 mit (b2) aliphatischen und/oder cycloaliphatischen Diisocyanaten, wobei das Verhältnis von Isocyanat- zu Hydroxylgruppen 2.2 bis 1.7 beträgt, und anschliessende Umsetzung der verbleibenden freien Isocyanatgruppen mit (b3) Acetessigsäurealkylestern, die als Alkylgruppen Methyl-, Ethyl-, n-Propyl-, i-Propyl-, n-Butyl-, i-Butyl- oder sec.-Butylgruppen aufweisen, erhalten wurden, wobei das Mengenverhältnis zwischen Copolymerisat (a) und blockiertem Polyisocyanat (b) so gewählt ist, dass auf ein Äquivalent Hydroxylgruppen mindestens 0,5 Äquivalente und höchstens 2 Äquivalente blockierte Isocyanatgruppen kommen, in (c) organischen Lösungsmitteln, sowie übliche Lackzusatzstoffe, gegebenenfalls Pigmente und Füllstoffe, zur Herstellung von Steinschlagschutzschichten im Kraftfahrzeugbau.

Bevorzugt ist, dass das Verhältnis von Isocyanat- zu Hydroxylgruppen 2.1 bis 1.8, vorzugsweise 2.1 bis 1.9 beträgt.

Der Lack wird in der Regel auf die Kraftfahrzeugkarosserie-Teile aufgebracht, nachdem diese in üblicher Weise grundiert wurden. Bevorzugt ist eine sogenannte EC-Grundierung (Elektrocoating-Lackierung). Sie enthält, anneutralisierte, in Wasser dispergierte Bindemittel, hergestellt z.B. auf Basis natürlicher oder synthetischer Maleinatöle, saurer Polyester oder Acrylatharze oder Amino-Epoxidharze, wie sie z.B. in DE-A-27 37 174, DE-A-28 24 428, EP-A-04 090 und DE-A-31 22 641 beschrieben sind, in Kombination mit Pigmenten und Füllstoffen.

Durch Eintauchen des zu beschichtenden Werkstückes, z.B. einer Automobil-Karosserie, in die wässrige Dispersion und Anlegen einer elektrischen Spannung von 100 bis 400 Volt scheidet sich der Lack je nach Bindemittel-Typ entweder an der Anode oder an der Kathode ab. Anschliessend wird der so applizierte Lackfilm bei Temperaturen von z.B. 160 bis 200 °C eingebrannt.

Es können auch mehrschichtige Grundierungen vorliegen.

Darauf kann der erfindungsgemäss verwendete Lack aufgebracht werden. Dieser enthält als hydroxylgruppenhaltige Copolymerisate (a) solche, wie sie im Stand der Technik zur Herstellung von filmbildenden Überzügen in Kombination mit blockierten Isocyanaten bekannt sind.

Als hydroxylgruppenhaltige Copolymerisate (a) kommen neben den eigentlichen Polymerisatharzen wie Polyacrylatharzen auch Polykondensationsharze wie Polyester, Alkydharze oder Epoxidharze und Polyadditionsharze wie Polyurethanharze in Betracht.

Als Polymerisatharze kommen im wesentlichen Polyacrylatharze zur Anwendung, welche bereits in zahlreichen Patentschriften wie DE-A-15 95 243, DE-A-20 54 231, DE-A-20 21 178 und DE-A-26 03 259 beschrieben sind. Es handelt sich hierbei um Polymerisate von Acrylmonomeren wie (Meth-)-Acrylsäure, Methyl(meth)acrylat, Hydroxyethyl-(meth)acrylat usw., Styrol, Vinylverbindungen usw., wie sie auch in Wagner/Sarx, Lackkunstharze, 5. Auflage, Viertes Kapitel, Seite 229-238 beschrieben sind.

Als Polykondensationsharze kommen sowohl Polyester- und Alkydharze als auch Epoxidharze in Betracht. Polyesterharze sind Umsetzungsprodukte von aliphatischen, cycloaliphatischen und/oder aromatischen Mono- und/oder Polycarbonsäuren mit aliphatischen und/oder cycloaliphatischen Mono-. und/oder Polyolen. Besonders bevorzugt sind Polyester bzw. Alkydharze, welche als Carbonsäurekomponente Verbindungen wie Adipinsäure, Benzoesäure, p-tert.-Butylbenzoesäure, Maleinsäure, Fumarsäure, o-, m-, p-Phthalsäure, Sebacinsäure, Tetrahydro-, Hexahydro-Phthalsäure, Trimellithsäure sowie aliphatische gesättigte und/oder ungesättigte Monocarbonsäuren mit einer Kohlenstoffzahl von 6 bis 20 und als Alkoholkomponente Verbindungen wie Ethylenglykol, Propylenglykol, Glyzerin, Pentaerythrit, Neopentylglykol, Trimethylolpropan, Hexandiol, Hydroxypivalinsäureneopentylglykolester, Diethylenglykol, Dipropylenglykol eingebaut enthalten. Solche Polyester bzw. Alkydharze sind beschrieben in Houben-Weyl, Makromolekulare Stoffe II, Band 14/2, Seite 4-42 und in Ullmann, «Encyklopädie der technischen Chemie», 4. Auflage, Band 19, Seite 61-86. Vorzugsweise kommen Polyester bzw. Alkydharze in Betracht, welche ein rechnerisches mittleres Molekulargewicht von 500 bis 5000 und eine Hydroxyfunktionalität von 2 bis 10 besitzen.

Als hydroxylgruppenhaltige Polyepoxidverbindungen werden solche verwendet, welche einen Hydroxylwert von 0.2-0.4 Mol OH pro 100 g Harz, ein mittleres Molekulargewicht von 800-4000 g/Mol besitzen und hergestellt wurden aus Epichlorhydrin und Bisphenol A. Solche Verbindungen sind beschrieben in Ullmann, Encyklopädie der technischen Chemie, 4. Auflage, Band 10, Seite 563-580. Diese hydroxylgruppenhaltigen Polyepoxidverbindungen können jedoch aufgrund ihrer chemischen Struktur nicht für die Herstellung von Lacken verwendet werden, welche für die Herstellung von der Witterung ausgesetzten Lackfilmen eingesetzt werden sollen.

Als Polyadditionsharze werden solche verwendet, welche aus OH-haltigen Polyethern, insbesondere Polypropylenglykolen, und/oder Polyolen mit di- und/oder tri-funktionellen Isocyanaten hergestellt werden, wobei als gegenüber Isocyanaten reaktive Substanz auch geringe Mengen primäre oder sekundäre Amine verwendet werden können und die entstehenden Reaktionsprodukte OH-Gruppen tragen. Es können auch OH-Gruppen tragende Umsetzungsprodukte aus OH-haltigen Polyestern mit Polyisocyanaten verwendet werden. Bevorzugt sind Polyadditionsharze mit einer OH-Zahl von 50 bis 200 und einer OH-Funktionalität von 2 bis 6.

Die Copolymerisate (a) werden im Gemisch mit den nachfolgend definierten Polyisocyanaten (b) verwendet. Als Polyhydroxylverbindungen (b1) für die Herstellung der speziellen blockierten Polyisocyanate (b) können grundsätzlich alle Polyhydroxylverbindungen mit 2 bis 4 Hydroxylgruppen pro Molekül und mit einem mittleren Molekulargewicht von 400-2000 verwendet werden.

So können z.B. hydroxylgruppenhaltige Polyester, hergestellt durch Kondensation von ein- und/oder mehrfunktionellen Alkoholen mit ein- und/oder mehrfunktionellen Carbonsäuren zur Herstellung der blockierten Polyisocyanate verwendet werden. Es können ferner auch hydroxylgruppenhaltige Polyester, hergestellt durch Umsetzung von ε-Caprolacton mit niedermolekularen Polyolen, verwendet werden. Solche Polyole sind z.B. Trimethylolpropan, Glyzerin, Hexandiol-1,6, Ethylenglykol, Propandiol-1,2, Pentaerythrit usw. oder Gemische solcher Polyole.

Ferner können auch hydroxylgruppenhaltige Polyether, z.B. abgeleitet von Ethylenglykol, Propandiol-1,2 oder Butandiol-1,4 zur Herstellung der erfindungsgemäss einzusetzenden blockierten Polyisocyanate (b) verwendet werden.

Es ist auch möglich, hydroxylgruppenhaltige Polyurethane, hergestellt aus Di(Poly)-Isocyanaten und Polyolen, für die Herstellung der blockierten Polyisocyanate zu verwenden.

Grundsätzlich ist auch die Verwendung von hydroxylgruppenhaltigen Polyacrylaten, Epoxidverbindungen usw. möglich, sofern deren mittleres Molekulargewicht zwischen 400 und 2000 liegt.

Diese Hydroxylverbindungen werden zur Herstellung der erfindungsgemäss einzusetzenden blockierten Polyisocyanate (b) umgesetzt mit den oben definierten aliphatischen und/oder cycloaliphatischen Diisocyanaten (b2). Beispiele hierfür sind Hexamethylendiisocyanat, Trimethylhexamethylendiisocyanat, 3-Isocyanatomethyl-3,5,5-trimethylcyclohexylisocyanat und Dicyclohexylmethandiisocyanat. Steinschlagschutzschichten mit diesen Isocyanaten lassen sich auch sehr gut z.B. mit Füllern, aber auch mit pigmentierten Decklacken und Klarlacken überlackieren. Dies kann, wie dies auf diesem technischen Gebiet bekannt ist, auch nass-in-nass erfolgen.

Das Mengenverhältnis zwischen Copolymerisat (a) und blockiertem Polyisocyanat (b) ist so zu wählen, dass auf ein Äquivalent Hydroxylgruppen mindestens 0,5 Äquivalente und höchstens 2 Äquivalente geblockter Isocyanatgruppen kommen. Besonders bevorzugt sind 0,8 bis 1,3 Äquivalente geblockter Isocyanatgruppen der Isocyanatkomponente pro Äquivalent Hydroxylgruppen der Copolymerisatkomponente.

Als organische Lösungsmittel (c) dienen zweckmässig aromatische Kohlenwasserstoffe wie Xylol, Solvesso 100 (Esso) (eingetragenes Warenzeichen), Glykolester wie Ethylglykolacetat, Ester wie Butylacetat, Alkohole wie Isopropanol, Ether wie Ethylenglykoldimethylether oder andere organische Lösungsmittel, welche die Bindemittel zu lösen vermögen, wobei als Lösungsmittel eine der beschriebenen Verbindungen als Einzelsubstanz oder ein Gemisch der genannten Substanzen verwendet werden kann.

Der Lack gemäss der Erfindung enthält vorzugsweise auf 100 Gew.-Teile Bindemittel, d.h. Gesamtmenge von Copolymerisat (a) und blockiertem Isocyanat (b), etwa 10 bis 50 Gew.-Teile Lösungsmittel (c), besonders bevorzugt etwa 15 bis 35 Gew.-Teile Lösungsmittel.

Ausserdem enthält der Lack die üblichen Additive, wie Siliconöle oder niedermolekulare Acrylpolymere (Verlaufsmittel), Pigmentbenetzungsmittel (Sojalecithin), Weichmacher (Palatinol C, eingetragenes Warenzeichen), Epoxidharze, UV-Absorber, Füllstoffe wie Schwerspat, Kaolin, Talkum; Thixotropierungsmittel wie Aerosil, Bentone (beide eingetragene Warenzeichen); Katalysatoren wie Zink-Organische Verbindungen.

Weiterhin kann der Lack Pigmente enthalten, um einen gewünschten Farbton oder Deckkraft zu erzielen. Wie erwähnt wurde, sind besonders erwünscht solche Lackschichten, die eine zusätzliche Steinschlagschutzschicht überflüssig machen. Der Lack gemäss der Erfindung kann als Füllerschicht und/oder Decklack (Einschicht- oder Zweischichtdecklack) formuliert und eingesetzt werden. Eine zusätzliche Steinschlagschutzschicht ist dann nicht erforderlich. Da durch Steinschlag leicht der Decklack beschädigt und herausgeschlagen wird, ist es erwünscht, dass die darunter liegende Schicht die gleiche Pigmentierung wie der Decklack oder zumindest einen ähnlichen Farbton aufweist. Bekanntlich werden Kraftfahrzeuge häufig in leuchtenden Farben lackiert. Die hierzu verwendeten Pigmente sind häufig schwer dispergierbar, d.h. zum Eindispergieren dieser Pigmente in das Bindemittel müssen Temperaturen von mindestens 40°C angewandt werden. Dies ist jedoch nicht möglich, wenn als Bindemittel für Lackformulierungen, welche für Einbrenntemperaturen unterhalb 130°C konzipiert sind, Gemische oder Preaddukte von hydroxylgruppenhaltigen Copolymerisaten und blockierten Polyisocyanaten eingesetzt werden, weil diese bei den Vermahl- bzw. Dispergiertemperaturen von über 40°C mindestens teilweise reagieren. Es wurde gefunden, dass dieses Problem in überraschend einfacher Weise gelöst werden kann, wenn der erfindungsgemäss zu verwendende Lack hergestellt wird, indem die Pigmente in die hydroxylgruppenhaltigen Copolymerisate (a) in an sich bekannter und üblicher Weise eindispergiert werden, und dass erst danach bei Temperaturen unter etwa 45°C die blockierten Polyisocyanate (b) und gegebenenfalls sonstigen Zusatzstoffe eingerührt werden. Das Verfahren kann in vorzüglicher Weise mit äusserst schwer dispergierbaren Pigmenten durchgeführt werden, die z.B. bei Temperaturen von über 40°C, sogar über 60°C eindispergiert werden müssen. Da das Einrühren der Polyisocyanate in kurzer Zeit beendet ist, können hierfür auch Temperaturen bis etwa 50°C eingesetzt werden. Wichtig ist, dass die fertigen Lacke möglichst bald auf Raumtemperatur abgekühlt werden. Sie besitzen jedoch eine ausgezeichnete Lagerstabilität auch bei Temperaturen über 25°C. Sie sollten aber über längere Zeiträume von mehreren Wochen und Monaten nicht bei Temperaturen über 35°C gelagert werden. Versuche haben ergeben, dass die Lacke bei einer Testtemperatur von 32°C mehr als 3 Wochen gelagert werden können, ohne dass ein merklicher Anstieg in der Viskosität zu beobachten wäre.

Eine Dispergierung der Pigmente bei erhöhten Temperaturen ist notwendig, um einen guten Verlauf des Lackes und einen guten Decklack-Stand sowie Schleierfreiheit und Glanz zu erzielen. Beispiele für schwer dispergierbare Pigmente sind Antrachinon-. Molybdat-, Eisenoxid-, Phthalocyanin-Pigmente.

Der erfindungsgemäss verwendete Lack wird zur Erzielung von steinschlagresistenten Lackschichten geringer Stärke, insbesondere einer Trockenfilm-Schichtdicke von 15 bis 50 µm eingesetzt. Bevorzugt ist eine Trockenfilm-Schichtdicke von 20 bis 45 µm.

Die Applikation des Lackes gemäss der Erfindung erfolgt in üblicher Weise, z.B. durch Spritzen, Airless-Spritzen oder elektrostatisches Versprühen.

Der Lack wird anschliessend eingebrannt, wobei relativ niedrige Temperaturen angewandt werden können. Wenn anschliessend keine weitere Schicht nass-in-nass aufgebracht wird, kann bei Temperaturen von etwa 120 bis 180°C eingebrannt werden, wobei im allgemeinen eine Temperaturobergrenze von weniger als 160°C, vorzugsweise weniger als 140°C und sogar weniger als 130°C ausreichend sind.

Die Einbrennzeiten liegen unter 60 Minuten, zweckmässig unter 40 Minuten, bevorzugt unter 30 Minuten. Es kann z.B. bei etwa 120°C während 20 bis 25 Minuten eingebrannt werden.

Derartig niedrige Einbrenntemperaturen sind auch dann vorteilhaft, wenn anschliessend mit einer weiteren Lackschicht nass-in-nass überlackiert wird. Die Füller des Stands der Technik können bei sehr niedrigen Temperaturen eingebrannt werden, und sie werden, wie bereits erwähnt, zweckmässig nass-in-nass aufgetragen, damit Steinschlagschutzschicht und Füller in einem einzigen Vorgang eingebrannt werden können.

Die Herstellung der gemäss der Erfindung verwendeten Polyisocyanate (b) ist z.B. in DE-A-26 12 783 beschrieben oder kann nach dem dort genannten Verfahren erfolgen.

### Herstellungsbeispiel A

807 g eines Polycaprolactontriols (CAPA 305, eingetragenes Warenzeichen, der Fa. INTEROX Chem. Ltd.) wurden in einem Reaktionsgefäss mit 1050 g Ethylglykolacetat und 995 g 3-Isocyanatomethyl--3,5,5-trimethyl-cyclohexylisocyanat bei 80°C umgesetzt, bis ein NCO-Gehalt von 6,6 Gew.-% erreicht ist. Danach werden 637 g Acetessigsäureethylester zugegeben und bei 100°C in Gegenwart von 10 g Zinkacetylacetonat so lange gehalten, bis ein NCO-Gehalt von weniger als 0.1 Gew.-% erreicht ist.

### Herstellungsbeispiel B (Vergleich)

807 g des Polycaprolactontriols von Herstellungsbeispiel A werden in einem Reaktionsgefäss mit 772 g Ethylglykolacetat und 995 g 3-Isocyanatomethyl-3,3,5-trimethylcyclohexyldiisocyanat bei 80°C umgesetzt, bis ein NCO-Gehalt von 7.3 Gew.-% erreicht ist. Danach wird sofort auf Raumtemperatur gekühlt.

### Beispiel 1

Ein Steinschlagschutzschicht-Lack wurde aus folgenden Komponenten hergestellt:

21.5 g hydroxylgruppenhaltiger Polyester (Desmophen 670, 75%ig in Ethylglykolacetat, eingetragenes Warenzeichen der BAYER AG, Leverkusen)

0.5 g feinverteiltes Siliziumdioxid (Aerosil, eingetragenes Warenzeichen)

1.0 g Russ

4.0 g Titandioxid (Rutil) (Pigment)

29.0 g Bariumsulfat (Füllstoff)

3.0 g Butylacetat

31.7 g Polyisocyanat nach Herstellungsbeispiel A

9.3 g Butylacetat

Es wurden alle Bestandteile mit Ausnahme der letzten zwei Komponenten bei 45 bis 50°C zur Eindispergierung der Pigmente und Füllstoffe in das Bindemittel in einer Perlmühle gemahlen. Das Mahlgut wurde dann der Perlmühle entnommen, und die beiden letzten Komponenten wurden eingerührt.

Das nach Vermahlen und Vermischen erhaltene Gemisch wurde mit einem Gemisch aus 2 Gew.-Teilen Ethylglykolacetat und 1 Gew.-Teil Gemisch von aromatischen Kohlenwasserstoffen (Solvesso 100, eingetragenes Warenzeichen) auf eine Viskosität von 40 sec. im AK 4-Becher bei 20°C eingestellt.

Der Lack von Beispiel 1 wurde auf ein elektrotauchlackiertes phosphatiertes Stahlblech aufgespritzt und mit einem handelsüblichen Füller nass-innass überlackiert. Beide Lackschichten wurden zusammen in einem Umluftofen, wie in Tabelle 1 angegeben, ausgehärtet. Danach wurde ein handelsüblicher Decklack aufgespritzt und während 15 Minuten bei 130°C ausgehärtet.

| Trockenfilmdicken: | Elektrotauch-Schicht | 10 µm |
| | Steinschalgschutz-Schicht | 21 µm |
| | Füller-Schicht | 21 µm |
| | Decklack-Schicht | 50 µm |

Die Steinschlag-Tests wurden mit einem Steinschlagprüfgerät nach VDA (Verband der Automobilindustrie) durchgeführt, hergestellt von der Firma Erichsen, Modell Nr. 508.

Die Prüfbedingungen waren:

| Kesselvordruck | 4.5 bar |
| Düsendruck | 1.0 bar |
| Stahlschrotmenge | 500 g |
| Beschusszeit | 5 s |

**Tabelle 1**

| Einbrenn-Bedingung für Steinschlagschutz-/Füller-schicht «nass-in-nass» | Bewertung nach DIN 53230 Beispiel 1 |
| --- | --- |
| 20 Minuten 125°C | 1 |
| 20 Minuten 140°C | 1 |

Bewertet wurde die Menge der abgeplatzten Lackschicht, ausgedrückt in Kennzahlen nach DIN 53230.

Die Lagerstabilität wurde durch Viskositätsmessung während der Lagerung des Lackes bei 32°C ermittelt. Dabei wurde die Lackformulierung von Beispiel 1 sowie die entsprechende reine Bindemittelkombination (Klarlack) geprüft.

*Tabelle 2*

| Viskosität nach Tagen (mPas/20°C) | Beispiel 1 | |
|---|---|---|
| | (mit Pigmenten) | (ohne Pigmente) |
| 0 | 500 | 2300 |
| 4 | 500 | 2500 |
| 11 | 500 | 2400 |
| 21 | 520 | 2400 |
| 30 | 570 | 2500 |

Messgerät: Rotovisko RV 21 (Haake), Messkopf 500
Messsystem: Becher, Drehkörper MV I

Die Viskositäten wurden bei folgenden Geschwindigkeitsgefällen D (s$^{-1}$) ermittelt:
58 s$^{-1}$ für die Bindemittel (ohne Pigmente)
231 s$^{-1}$ für Steinschlagschutzlack (mit Pigmenten)

*Beispiel 2*
Es wurde wie in Beispiel 1 beschrieben gearbeitet unter Verwendung folgender Komponenten:

10.5 g hydroxylgruppenhaltiger Polyester (Desmophen 800, 85%ig in Ethylglykolacetat, eingetragenes Warenzeichen der BAYER AG, Leverkusen)
1.34 g Acronal 700 L (eingetr. Warenzeichen, der BASF)
5.12 g aufgeschlossene Bentone 38 (eingetragenes Warenzeichen)*
5.12 g Bayertitan RKB-2 (eingetr. Warenzeichen)
0.52 g Bayferrox 303 T (eingetr. Warenzeichen)
17.10 g Blancfixe N (eingetr. Warenzeichen)
0.67 g Aerosil 200 (eingetr. Warenzeichen)
35.96 g Polyisocyanat (Herstellungsbeispiel A)

\* aufgeschlossene Bentone der Zusammensetzung
12.5 g Bentone 38
5.0 g Butanol
82.5 g Xylol

Das nach Vermahlen und Vermischen erhaltene Gemisch wurde mit einem Gemisch aus 2 Gew.-Teilen Ethylglykolacetat und 1 Gew.-Teil Gemisch von aromatischen Kohlenwasserstoffen (Solvesso 100, eingetragenes Warenzeichen) auf eine Viskosität von 40 sec. im AK 4-Becher bei 20°C eingestellt.

Das Vermahlen erfolgte zur Erzielung eines guten Verlaufs bei 60°C während 30 min.

Die Lackformulierung von Beispiel 2 entspricht bezüglich der eingesetzten Pigmente und Füllstoffe sowie hinsichtlich des Pigment/Bindemittelverhältnisse typischen Füllerformulierungen nach dem Stand der Technik. Der Lack gemäss Beispiel 2 ergibt eine schleifbare Steinschlagschutzschicht mit Füllereigenschaften, die direkt mit Decklack überlackiert werden kann.

Der Lack wurde auf elektrotauchlackierte phosphatierte Stahlbleche aufgespritzt und während 20 Minuten bei 125°C ausgehärtet (Trockenfilmdicke 37 µm). Die resultierende Lackschicht wurde hinsichtlich ihrer Oberflächenhärte mittels Erichsen-Pendelhärtemessgerätes (Pendelhärte nach König) geprüft und mit Schleifpapier der Körnung 600 auf Nassschleifbarkeit getestet (das Schleifpapier darf sich nicht mit Schleifschlamm zusetzen).

*Tabelle 3*

| Prüfung | Beispiel 2 |
|---|---|
| Steinschlagtest (wie Beispiel 1) | 1-2 |
| Schleifbarkeit | ja |
| Lagerstabilität | Viskosität ist konstant |
| Pigmentierbarkeit bei 60-80°C | uneingeschränkt möglich |
| Pendelhärte (nach König) | 121 s |

*Beispiel 3*
Ein farbig pigmentierter Lack wurde aus folgenden Komponenten hergestellt:

315 g hydroxylgruppenhaltiger Polyester (Desmophen 800, 85%ig in Ethylglykolacetat, eingetragenes Warenzeichen)
659 g Titandioxid RN 59 der Firma Kronos
35 g Sicotransrot L 2817 (Hersteller BASF, eingetr. Warenzeichen)
9 g feinverteiltes Siliciumdioxid
1079 g Polyisocyanat (Herstellungsbeispiel A)

Die ersten vier Komponenten wurden zusammen mit 730 g Glasperlen (2 mm Durchmesser) in einer Laborperlmühle (Firma DRAIS, Typ PM 1) während 30 Minuten bei 70°C dispergiert.

Das Material wurde anschliessend von den Glasperlen abgetrennt, mit der restlichen Komponente komplettiert und mittels Ethylglykolacetat auf eine AK 4-Becher-Auslaufzeit von 40 Sekunden bei 20°C eingestellt.

*Vergleichsbeispiel 1*
Es wurde wie in Beispiel 3 gearbeitet, wobei jedoch bei 45°C dispergiert wurde. Um beim eingebrannten Film die gleiche Farbstärke nach DIN 53238 wie nach Beispiel 3 zu erreichen, musste jedoch mehr als 60 Minuten dispergiert werden.

*Beispiel 4*
Ein steinschlagfester Klarlack wurde mit folgenden Komponenten formuliert:
11.00 g Macrynal SSM 510n (60%ig in Xylol/Ethylglykolacetat 2:1)*
62.95 g Desmophen 670 (75%ig in Ethylglykolacetat)*
1.40 g Baysilonöl OL (10%ig in Xylol)*
5.00 g Butylacetat
0.50 g Tinuvin 292*

0.50 g  Tinuvin 328*
6.00 g  Ethylglykolacetat
106.40 g  Polyisocyanat (Herstellungsbeispiel A)
* eingetragene Warenzeichen

Die Komponenten wurden der Reihe nach vermischt und nach Zugabe der Polyisocyanatkomponente auf eine AK 4-Viskosität (20°C) mit Ethylglykolacetat von 35 s eingestellt.

### Vergleichsbeispiel 2

Es wurde gearbeitet wie in Beispiel 4, jedoch anstatt 106,40 g der Polyisocyanatkomponente (Herstellungsbeispiel A) 78.70 g des unverkappten, jedoch ansonsten identischen Polyisocyanats (Herstellungsbeispiel B) verwendet. Das äquimolare Verhältnis von NCO-Gruppen zu OH-Gruppen ist identisch mit Beispiel 4.

Auf phosphatierte elektrotauchlackierte und mit handelsüblichem Füller überlackierte Prüfbleche wurde ein handelsübliches Bronce-Base-Coat (Farbe: Silbermetallic) aufgespritzt. Nach 10 Minuten Ablüftzeit bei etwa 25°C wurden nass-in-nass die Lacke nach Beispiel 4 bzw. Vergleichsbeispiel 2 aufgespritzt und während 30 Minuten bei 120°C im Umluftofen gehärtet.

Die beiden Prüfbleche wurden in einem Schnellbewitterungsgerät der Firma Atlas, Electric Devices Comp., Chicago; Marke UVCON auf Bewitterungsstabilität getestet. Die Ergebnisse sind in Tabelle 4 aufgeführt und zeigen keinen signifikanten Unterschied der Glanzhaltung des Lackes mit dem erfindungsgemäss einzusetzenden Polyisocyanat (b) im Vergleich zu dem mit unverkapptem Polyisocyanat.

### Tabelle 4

|  | Beispiel 4 | Vergleichs-beispiel 2 |
|---|---|---|
| Anfangsglanz | 88% | 87% |
| Glanz nach 650 h UVCON | 42% | 45% |

Der Glanz wurde gemessen mit einem Gerät der Firma Byk Mallinckrodt, Wesel;
Typ: Multigloss 4060
Messwinkel: 20°

### Patentansprüche

1. Verwendung nicht wässriger Lacke, enthaltend als Bindemittel ein filmbildendes Gemisch aus (a) hydroxylgruppenhaltigen Copolymerisaten und (b) blockierten Polyisocyanaten, die durch Umsetzung von (b1) Polyhydroxylverbindungen mit 2 bis 4 Hydroxylgruppen pro Molekül und mit einem Molekulargewicht von 400 bis 2000 mit (b2) aliphatischen und/oder cycloaliphatischen Diisocyanaten, wobei das Verhältnis von Isocyanat- zu Hydroxylgruppen 2.2 bis 1.7 beträgt, und anschliessende Umsetzung der verbleibenden freien Isocyanatgruppen mit (b3) Acetessigsäurealkylestern, die als Alkylgruppen Methyl-, Ethyl-, n-Propyl-, i-Propyl-, n-Butyl-, i-Butyl- oder sec.-Butylgruppen aufweisen, erhalten wurden, wobei das Mengenverhältnis zwischen Copolymerisat und blockiertem Polyisocyanat so gewählt ist, dass auf ein Äquivalent Hydroxylgruppen mindestens 0,5 Äquivalente und höchstens 2 Äquivalente blockierte Isocyanatgruppen kommen, in (c) organischen Lösungsmitteln, sowie übliche Lackzusatzstoffe, gegebenenfalls Pigmente und Füllstoffe, zur Herstellung von Steinschlagschutzschichten im Kraftfahrzeugbau.

2. Verwendung nach Anspruch 1, wobei das Verhältnis von Isocyanat- zu Hydroxylgruppen 2.1 bis 1.8, vorzugsweise 2.1 bis 1.9 beträgt.

### Claims

1. Use of non-aqueous lacquers containing, as binder, a film-forming mixture of (a) copolymers containing hydroxyl groups and (b) blocked polyisocyanates which have been obtained by the reaction of (b1) polyhydroxyl compounds containing from 2 to 4 hydroxyl groups per molecule and having a molecular weight of from 400 to 2,000 with (b2) aliphatic and/or cycloaliphatic diisocyanates, the ratio of isocyanate groups to hydroxyl groups being from 2.2 to 1.7, followed by reaction of the remaining free isocyanate groups with (b3) acetic acid alkyl esters containing, as alkyl groups, methyl, ethyl, n-propyl, i-propyl, n-butyl, i-butyl or sec.-butyl groups, the quantitative proportions of copolymer to blocked polyisocyanate being so chosen that the quantity of blocked isocyanate groups is at least 0.5 equivalents and at most 2 equivalents to one equivalent of hydroxyl groups, in (c) organic solvents, as well as conventional lacquer additives, optionally pigments and fillers, for the production of stone-chipping-resistant layers in the construction of motor vehicles.

2. Use according to claim 1, in which the ratio of isocyanate groups to hydroxyl groups is from 2.1 to 1.8, preferably from 2.1 to 1.9.

### Revendications

1. Utilisation de peinture non aqueuse, contenant comme liant un mélange filmogène composé de (a) copolymères contenant des groupes hydroxyles et (b) de polyisocyanates bloqués, qui ont été obtenus par réaction de (b1) composés polyhydroxylés avec 2 à 4 groupes hydroxyles par molécule et d'un poids moléculaire de 400 à 2000 avec (b2) des diisocyanates aliphatiques et/ou cycloaliphatiques, le rapport des groupes isocyanates aux groupes hydroxyles étant de 2,2 à 1,7 et réaction successive des groupes isocyanates libres restants avec des esters alkylés d'acide acétylacétique, qui présentent comme groupes alkyles des groupes méthyle, éthyle, n-propyle, i-propyle, n-butyle, i-butyle ou sec.-butyle, le rapport quantitatif entre copolymère et polyisocyanate bloqué est choisi de telle façon que, pour un équivalent de groupe hydroxyle il y a au moins 0,5 équivalent et au plus 2 équivalents de groupes isocyanates bloqués, dans (c) des solvants organiques, ainsi que des additifs usuels des peintures, le cas échéant des pigments et des charges pour préparer des couches antigravillonnage dans l'industrie automobile.

2. Utilisation selon la revendication 1, le rapport des groupes isocyanates aux groupes hydroxyles étant de 2,1 à 1,8 de préférence 2,1 à 1,9.